# EUROPEAN PATENT APPLICATION

(11) **EP 4 782 497 A1**
(43) Date of publication of application: **29.07.2026**
(21) Application number: 25154476.3
(22) Date of filing: 28.01.2025
(51) Int. Cl.: C08L 23/04, C08L 23/06, C08L 23/08, C08F 210/02

(54) **POLYOLEFIN COMPOSITION COMPRISING RECYCLED POST-CONSUMER POLYMER (PCR)**

(71) Applicant: Basell Polyolefine GmbH, 50389 Wesseling (DE)
(72) Inventor: MIHAN, Shahram, 65926 Frankfurt/M. (DE); MANNEBACH, Gerd, 65926 Frankfurt/M. (DE); SCHMITZ, Harald, 65926 Frankfurt/M. (DE)
(74) Representative: LyondellBasell

(57) **Abstract**

In the present disclosure a polyolefin composition comprising a component I, which is a polyethylene enriched post consumer recyclate and a component II, which is a virgin derived polyolefin, having good mechanical properties such as high Environmental Stress Crack Resistance besides good processing properties and resulting in high quality applications. The polyolefin composition is advantageously used for injection moulding articles and products as caps ad closures.

## Description

### FIELD OF INVENTION

The present disclosure relates to a polyolefin composition comprising a recycled polyethylene component, with high Environmental Stress Crack Resistance and a high melt flow ratio which is advantageously used for injection moulding articles and products, especially for production of caps and closure.

### BACKGROUND OF THE INVENTION

Polyolefins are increasingly consumed in large amounts in a wide range of applications, including packaging for films, components for the automotive industry, and a huge variety of different other articles.

The resulting amount of post-consumer waste is therefore enormous, that's why people try to process Post-Consumer Waste (PCR) to reuse it. The plastic waste is collected, sorted by plastic type, and then mechanically crushed, washed, and melted into new plastic granules.

Polyethylene based materials are a particular problem when it comes to reuse. Considering the huge amount of waste collected, compared to the small amount of waste recycled back into the stream, there is still a great potential for reuse and mechanical recycling.

In general, the polyolefinic recyclates are commonly inhomogeneous, and are always mixed and cross contaminated with polypropylene (PP) and also non-polyolefins, such as polyethylene terephthalate (PET), polyamide (PA), polystyrene (PS) or non-polymeric substances like wood, paper, glass or aluminum which results in worse processability, while these multicomponent cross-contaminations drastically limit final applications.

Comparing the properties of recycled polyolefin materials and virgin materials, the recyclate normally shows properties, which are much worse unless the amount of recycled polyolefin added is extremely low. For example, such materials often have limited impact strength and poor mechanical properties (such as e.g., brittleness) and thus, they do not fulfil customer requirements. The use of post-consumer recyclate material PCR material results also in low processability, low melt flow rates and less mechanical strength in products etc. Polyethylene grades are used in a wide range of rigid applications where a significant contribution to sustainability and low carbon solutions is desired. A particular problem in recycled polyethylene materials is that variations of the desired properties can also be observed in recycled polyethylene blends depending on the waste origin, e.g. the ESCR (Environmental Stress Crack Resistance) suffers from inhomogeneity of the polyolefin composition.

The object of the present invention is therefore to provide a polyolefin composition comprising high amounts of recovered post consumer plastic waste and providing a polyolefin composition with good properties. Further it is an object of the invention to provide a polyolefin composition wherein at least a part of virgin polyolefin is replaced by polyolefinic material recovered from waste plastic material while thermomechanical properties, mechanical properties, processability, high environmental stress crack resistance and impact resistance of such a polyolefin composition are at least maintained or even improved.

### SUMMARY OF THE INVENTION

This object has been solved by providing
a polyolefin composition comprising,
   I. Component I in the range from 80 to 20 wt. %, preferably in the range from 75 to 25 wt. %, preferably in the range from 70 to 30 wt. %, preferably in the range from 60 to 40 wt. % of a polyethylene enriched blend of a post consumer recyclate component (PCR) (based on the total weight of the polyolefin composition), comprising 85 to 100 wt. % of polyethylene and 15 to 0 wt. % of propylene (based on the total weight of the polyolefin composition), having
      a) a density in the range from 0.948 to 0.960 g/cm³, preferably in the range from 0.950 to 0.958 g/cm³, preferably in the range from 0.953 to 0.956 g/cm³ (ISO 1183, at 23 °C);
      b) a MI2 in the range from 1.0 to 3.0 g/10 min, preferably in the range from 1.3 to 2.5 g/10 min, preferably in the range from 1.5to 2.0 g/10 min (ISO 1133, 190°C, 2.16 kg);
      c) a MI5 in the range from 1.0 to 30.0 g/10 min, preferably in the range from 2.0 to 25.0 g/10 min, preferably in the range from 3.0 to 20.0 g/10 min (ISO1133);
   II. component II in the range from 20 to 80 wt. %, preferably in the range from 25 to 75 wt. %, preferably in the range from 30 to 70 wt. %, preferably in the range from 40 to 60 wt. % (based on the total weight of the polyolefin composition) of at least one multimodal polyethylene, comprising
      a) at least one polyethylene homopolymer,
      b) at least one polyethylene copolymer, formed from ethylene and at least one olefin with at least 4 and / or 6 carbon atoms used as comonomer, having
      c) a density in the range of 0.948 to 0.960 g/cm³, preferably in the range of 0.950 to 0.958 g/cm³, preferably in the range of 0.952 to 0.955 g/cm³ (ISO 1183);
      d) a melt flow rate MI2 in the range of 1.0 to 5.0 g/10 min, preferably in the range of 1.5 to 4.0 g/10 min, preferably in the range of 2.0 to 3.0 g/10 min (ISO 1133, 190 °C, 2.16 kg);
      e) a melt flow rate MI5 in the range of 3.0 to 10.0 g/10 min, preferably in the range of 4.0 to 8.0 g/10 min, preferably in the range of 5.0 to 6.0 g/10 min (ISO 1133, 190°C, 5 kg);
wherein the sum of all ingredients always adds up to 100 wt. %.

The polyolefin composition comprising component I, polyethylene enriched post consumer recyclate, specifically using recyclate preferably from caps and closures, and component II, the virgin polyethylene component, derived either from Ziegler Natta catalyzed processes or by using a Hybrid catalyst, offers a significant improvement in material properties and environmental impact, with high FNCT and Charpy values. This innovative composition enhances the mechanical strength and durability of the final product, making it suitable for high-stress applications such as caps and closures. Additionally, the use of recyclate reduces the overall environmental footprint by minimizing the reliance on virgin materials and promoting the circular economy. This combination not only meets industry standards for performance but also aligns with sustainability goals, providing a competitive edge in the market.

### DETAILED DESCRIPTION OF THE INVENTION

This object has been solved by providing
a polyolefin composition comprising,
   I. Component I in the range from 80 to 20 wt. %, preferably in the range from 75 to 25 wt. %, preferably in the range from 70 to 30 wt. %, preferably in the range from 60 to 40 wt. % of a polyethylene enriched blend of a post consumer recyclate component (PCR) (based on the total weight of the polyolefin composition), comprising in the range of 85 to 100 wt. %, preferably in the range of 90 to 99.5 wt. %, preferably in the range of 95 to 97 at% of polyethylene and in the range of 15 to 0 wt. %, preferably in the range of 10 to 0.5 wt. %, preferably in the range of 5.0 to 3.0 wt. % of propylene (based on the total weight of the polyolefin composition), having
      a) a density in the range from 0.948 to 0.960 g/cm³, preferably in the range from 0.950 to 0.958 g/cm³, preferably in the range from 0.953 to 0.956 g/cm³ (ISO 1183, at 23 °C);
      b) a MI2 in the range from 1.0 to 3.0 g/10 min, preferably in the range from 1.3 to 2.5 g/10 min, preferably in the range from 1.5 to 2.0 g/10 min (ISO 1133, 190°C, 2.16 kg);
      c) a MI5 in the range from 1.0 to 30.0 g/10 min, preferably in the range from 2.0 to 25.0 g/10 min, preferably in the range from 3.0 to 20.0 g/10 min (ISO1133);
   II. component II in the range from 20 to 80 wt. %, preferably in the range from 25 to 75 wt. %, preferably in the range from 30 to 70 wt. %, preferably in the range from 40 to 60 wt. % (based on the total weight of the polyolefin composition) of at least one multimodal polyethylene, comprising
      a) at least one polyethylene homopolymer,
      b) at least one polyethylene copolymer, formed from ethylene and at least one olefin with at least 4 and / or 6 carbon atoms used as comonomer, having
      c) a density in the range of 0.948 to 0.960 g/cm³, preferably in the range of 0.950 to 0.958 g/cm³, preferably in the range of 0.952 to 0.955 g/cm³ (ISO 1183);
      d) a melt flow rate MI2 in the range of 1.0 to 5.0 g/10 min, preferably in the range of 1.5 to 4.0 g/10 min, preferably in the range of 2.0 to 3.0 g/10 min (ISO 1133, 190 °C, 2.16 kg);
      e) a melt flow rate MI5 in the range of 3.0 to 10.0 g/10 min, preferably in the range of 4.0 to 8.0 g/10 min, preferably in the range of 5.0 to 6.0 g/10 min (ISO 1133, 190°C, 5 kg);
wherein the sum of all ingredients always adds up to 100 wt. %.

This polyolefin composition provides a blended material comprising recyclate and less virgin polyethylene, being suitable for production of caps and closures, wherein only small amounts of component I, the polyethylene enriched polyethylene has is replaced by component II, the virgin derived polyolefin material, wherein the achieved properties such as fatigue crack growth rate are almost comparable to pure virgin polyolefins, as also can be seen by the good mechanical properties. Such compositions are applicable due to high melt flow and ideal combination of density and crack resistance for high quality injection moulding applications, especially for caps and closures. Optionally the polyolefin composition can comprise optionally further additives.

Further, the polyolefin composition has an FNCT in the range of 3.0 to 15.0 kJ/m2, preferably in the range of 4.0.0 to 13.5 kJ/m2, preferably in the range of 5.0 to 12.0 kJ/m2 (ISO 16770, 80 °C, 4 MPa, Arkopal N100).

Further, the polyolefin composition has a charpy in the range of 2.0 to 10.0 kJ/m2, preferably in the range of 3.5 to 8.0 kJ/m2, preferably in the range of 4.0 to 7.0 kJ/m2 (ISO 179-1).

Further providing enhanced mechanical properties: The polyolefin composition comprising component I, the polyethylene enriched post consumer recyclate and component II, the virgin polyethylene can improve the tensile strength, impact resistance, and fatigue performance of the material. This makes the caps and closures more durable and capable of withstanding repeated use and mechanical stress.

The blend is easy to process, making it easier for injection molding to obtain caps and closures. This can lead to more efficient manufacturing processes and reduced production times.

Incorporating polyethylene recyclates reduces the reliance on virgin materials, thereby decreasing the environmental impact. This approach supports sustainability initiatives and can improve the company's environmental credentials.

The polyolefin composition, wherein component II, the polyethylene component of virgin origin is having
a) a FNCT in the range of 8.0 to 20.0 kJ/m², preferably in the range of 10.0 to 18.0 kJ/m², preferably in the range of 12.0 to 16.0 kJ/m² (ISO 16770, 80 °C, 4 MPa, Arkopal N100);
b) a charpy in the range of 2.0 to 15.0 kJ/m², preferably in the range of 3.5 to 12.5 kJ/m², preferably in the range of 4.0 to 11.0 kJ/m² (ISO 179-1).

The polyolefin composition, wherein the polyethylene enriched post consumer recyclate is having
a) a FNCT in the range from 0.1 to 10.0 kJ/m², preferably in the range 0.15 to 9.5 kJ/m², preferably in the range from 0.2 to 8.5 kJ/m² (ISO 16770, at 25 °C4 MPa, Arkopal N100);
b) a charpy in the range from 1.0 to 10.0 kJ/m², preferably in the range from 1.5 to 7.0 kJ/m², preferably in the range from 2.5 to 5.0 kJ/m² (ISO 179-1, 50 °C, 6MPa).

The polyolefin composition may further comprise additives. Examples of additives for use in such a composition are pigments or dyes, anti-acids and/or anti-UVs, antistatic agents, nucleating agents and utilization agents (such as processing aid agents). Preferred additives are carbon black, at least one antioxidant and/or at least one UV stabilizer. The amount of these additives is in the range of 0.0 to 4.0 wt. %, preferably in the range of 0.01 to 3.0 wt. %, preferably in the range of 0.01 to 2.0 wt. % based on the total weight of the polyolefin composition.

Further can be Anti-acids added, one common example is calcium stearate. While due to the recycling origin of consumer waste, the composition may comprise further organic fillers, and/or inorganic fillers, and/or additives in the range of 0.5 to 8.5 wt. %, preferably in the range of 1.0 to 5.0 wt. %, preferably in the range of 2.0 to 3.5wt. %, based on the total weight of the polyolefin composition.

The polyolefin composition, wherein the polyethylene enriched post consumer recyclate component is comprising a post consumer resin being a regrind from post consumer waste, and/or a mixed plastic polyethylene recycling blend obtained from post consumer recyclate, obtainable by sorting, shredding etc. of post consumer waste, comprising polyethylene. Using sorted recyclates provided by the advantages in modern recycling technology, as they have improved the quality and consistency of recycled polyethylene, sorting has developed meaning that still contaminants are present in the recyclate used, but the amount of polypropylene significantly has been reduced. When blended with virgin polyethylene, the resulting material can achieve a uniform quality that meets industry standards.

The polyolefin composition is comprising
a) component I in the range of 80 to 20 wt. %, preferably in the range of 70 to 30 wt. %, preferably in the range of 60 to 40 wt. % (based on the total weight of the polyolefin composition) of the polyethylene enriched blend of the post consumer recyclate component, wherein the post consumer recyclate material is comprising polypropylene and polyethylene, in the range of 85.0 to 100 wt. % of polyethylene, preferably in the range of 90.0 to 99.0 wt. %, preferably in the range of 95.0 to 97.0 wt. % and in the range of 15.0 to 0 wt. % of polypropylene, preferably in the range of 7.0 to 2.5 wt. %, preferably in the range of 5.0 to 3.0 wt. % and is preferably derived from caps and closures,
b) component II in the range of 20 to 80 wt. %, preferably 30 to 70 wt. %, more preferably 60 to 40 wt. % of the at least one bimodal polyethylene, wherein the polyethylene is obtained using a Hybrid- catalyst or Ziegler-Natta- catalyst;
c) and optionally further additives, wherein the sum of all components always adds up to 100 wt. %.

Component I, the polyethylene enriched post consumer recyclate is commercially available, provided as coloured, sorted flakes, size distribution of 13 mm at the most, preferably derived from caps and closures.

The polyolefin composition comprises component I, the polyethylene enriched blend of a post consumer recyclate component which preferably is having food approval and is preferably derived from a regrind from caps and closures from beverages and consumer goods, comprising mainly polyethylene and polypropylene.

The recyclate is obtained from a recycled waste stream. The blend can be either recycled post-consumer waste, preferably from consumer waste such as caps and closures, from beverages. Also, the recyclate used can be derived from waste streams of recycled post-consumer waste and/or post-industrial waste.

Preferably, component I, the polyethylene enriched recycled material is obtained from recycled waste by means of plastic recycling processes known in the art. Such recyclates are commercially available, e.g. from Veolia (Aubervilliers, France, "Multiprop 3230"), or from SUEZ, _{(Paris, France)}.

It is considered that the present invention could be applicable to a broad range of different polyethylene enriched recyclate used in compositions comprising recyclate and having a high content of recycled polyethylene. Such polyethylene enriched recycled material may be provided in the form of flakes or granules.

The polyolefin composition comprises as component I post consumer plastic waste and as component II virgin polyethylene, resulting in the inventive polyolefin composition suitable to be used for second life applications such as in injection moulding applications, with very good mechanical properties and also high environmental stress crack resistance. The processing and application properties of recyclates are in many cases detrimental compared to virgin plastic. It has been found that by compounding, blending mixing and extruding, the at least bimodal, and/or multimodal polyethylene as described herein can be turned into the present polyolefin composition. The composition comprises a post consumer polyethylene based composition with superior properties, which match the required key properties as required for different applications.

Component II derived from virgin sources, in the range of 20 to 80 wt. %, preferably 30 to 70 wt. %, more preferably 60 to 40 wt. % (based on the total weight of the polyolefin composition) of at least one multimodal polyethylene, derived from a multi reactor process, using a single site hybrid catalyst as described in the following, comprising
a) at least one polyethylene homopolymer, obtained from a first reactor process,
b) at least one polyethylene copolymer formed from ethylene and at least one olefin with at least 4 and / or 6 carbons atoms used as comonomer, obtained from a further reactor process, wherein at least two different components are obtained, and distributed to finally obtain a multimodal polyethylene component having the following properties: such as
c) a density in the range of 0.948 to 0.960 g/cm³, preferably in the range of 0.950 to 0.958 g/cm³, preferably in the range of 0.952 to 0.955 g/cm³ (ISO 1183);
d) a melt flow rate MI2 in the range of 1.0 to 5.0 g/10 min, preferably in the range of 1.5 to 4.0 g/10 min, preferably in the range of 2.0 to 3.0 g/10 min (ISO 1133, 190 °C, 2.16 kg);
e) a melt flow rate MI5 in the range of 3.0 t0 10.0 g/10 min, preferably in the range of 4.0 to 8.0 g/10 min, preferably in the range of 5.0 to 6.0 g/10 min (ISO 1133, 190°C, 5 kg).

The corresponding molecular weight distribution Mw the of component II, the multimodal polyethylene is in the range of 70,000 g/mol up to 150,000 g/ mol, preferably in the range of 80,000 to 140,000 g/mol, preferably in the range of 90,000 to 120,000 g/ mol.

The virgin material is at least a bimodal resin, preferred a multimodal resin, which is suitable for different applications, which must withstand a cylindrical stress of e.g., 10.0 MPa (MRS10.0). A broad distribution of molecular weight and a high molecular weight offers besides good processability also high stiffness for products. In general, recycled polyethylene suffers when it comes to high quality properties.

Due to the extraordinary good properties of component II, the virgin polyethylene component as it combines both properties in a unique combination and is therefore very suitable for compounding with component I, the polyethylene enriched post consumer recyclate, it can be used for compounding of the virgin polyethylene component into the recyclate and obtain polyolefin composition which have good properties regarding processability and mechanical properties.

High melt flow rate (MFR) polyethylene refers to a type of polyethylene resin with a high flowability during the melt state. This characteristic is attributed to its molecular structure, which allows it to flow easily when subjected to heat and pressure. Here are some key points about high MFR polyethylene. The measurements show how easily a polyolefin can be melted and extruded. So, a high MFR value means that the polyolefin flows readily during processing. Due to its high MFR viscosity is low, which makes blending with hard to process recyclates so promising. Surprisingly it has been found that compounded in recyclates provides the promising polyolefin composition.

Compounding refers per definition to a process of combining different materials or substances to create a new mixture or substances to create a new mixture with specific properties or characteristics that may not be achievable individually. This process is used in various applications to enhance the performance of the materials.

An important feature of polyolefin composition and also of polyethylene components of recycled origin and multimodal virgin component is the environmental stress cracking resistance (ESCR or FNCT), which defines the formation of cracks in a material caused by relatively low tensile stress and environmental conditions, and is given in the number of hours that 50 % of the specimens tested exhibit stress cracks. The ESCR in polyethylene depends strongly on molecular weight, molecular weight distribution, chain branching (measured indirectly by density), and ESCR testing conditions (i.e., reagent concentration, temperature, stress). In general, resistance to slow crack growth (ESCR) decreases as the amount of crystallinity increases in a material.

In an embodiment the polyolefin composition is having an environmental stress crack resistance (ESCR) is in the range from 450 to 1200 h, preferably in the range form 500 to 1100 h, preferably in the range from 600 to 1000 h (ISO 16770, 4 MPa, Arkopal N100).

In addition to that, polyolefin composition has a strain hardening modulus (SH modulus) which is in the range from 10.0 to 40.0 MPa, preferably in the range from 13.0 to 30.0 MPa, preferably in the range from 17.0 to 25.0 MPa and refers to a material property that characterizes how a plastic material like polyethylene behaves under deformation.
Specifically, it describes the rate at which a material's stress increases with increasing strain after the materials has yielded.

Also, a higher strain hardening modulus indicates that the material can undergo more deformation before failure and exhibits greater resistance to plastic deformation. This property is important in applications where the material may experience significant deformation or stretching, as it helps predict how the material will respond to mechanical forces. Keep in mind that the exact numerical values pf these properties can vary depending on the specific grade and formulation of polyethylene.

The polyolefin composition, having an impact strength (ISO 179-1, at 23 °C) is in the range from 4.0 to 20.0 kJ/m2, preferably in the range from 5.0 to 18.0 kJ/m2, preferably in the range from 6.0 to 15.0 kJ/m2, and an impact strength (ISO 179-1, at 0 °C) in the range from 1.0 to 20.0 kJ/m2, preferably in the range from 2.0 to 18.0 kJ/m2, preferably in the range from 4.0 to 10.0 kJ/m2.

The polyolefin composition comprising component II being a regrind from post-consumer waste, and/or a mixed plastic polyethylene recycling blend obtained from post consumer recyclate, obtainable by sorting, washing, steaming, shredding etc. mixing of post consumer polyethylene comprising waste.

Selection of components of polyethylene comprising one or more different polyethylene post consumer resins. Post consumer blends are derived from all different post consumer materials, and also comprising post industrial polyethylene based waste.

The polyolefin composition comprises component I, which is a polyethylene enriched post consumer recyclate from post consumer waste shredded into pieces such that their final size, measured at the maximum length of the pieces, is 10 mm or greater, preferably derived from caps and closures.

Component I is a post-consumer resin that preferably originated from a specific collection of domestic or household waste. Preferably, polyethylene post-consumer resin and industrial packaging waste. In a preferred embodiment, component A is or comprises a regrind from post-consumer sorted caps. However, any polyethylene post consumer recyclate, enriched in polyethylene, having low amounts of polypropylene having comparable features may be used.

The amount of polypropylene present in component I is in the range of 15 to 0 wt. %, preferably in the range of 7.0 to 5.0 wt. %, preferably in the range of 5.0 wt. % to 3.0 wt. %.

Using a mixture comprising PP and PE can enhance the processability of the material, making it easier to mold and shape during manufacturing. This can lead to more efficient production processes and better-quality final products.

Leaving a certain amount of polypropylene in polyethylene in general significantly enhanced cost reduction as a polyethylene enriched recyclate does not need to be 100% pure without any contaminants. Using a recycled polyethylene - polypropylene blend can therefore reduce material costs, as recycled PP is generally less expensive than virgin materials. This cost-saving can be significant, especially in large-scale production.

The polyolefin composition, comprising as component I a polyethylene of virgin origin, obtainable using a Ziegler Natta catalyst or Hybrid catalyst, being a bimodal, preferably a multimodal polyethylene, wherein the polyethylene is homopolymer and/ or copolymer or mixture thereof, the copolymer comprising ethylene and one or more alpha-olefin co-monomers selected from the group comprising C3 to C20 alpha-olefins; with preference, the co-monomer is 1 -hexene, 1- butene or 1-octen.

The polyolefin composition according to any of the preceding claims, characterized in that polyethylene is at least a bimodal, preferably multimodal polyethylene obtained by a process using a hybrid catalyst system, obtainable by a process described herein.

Surprisingly, it has been found that the resulting polyolefin composition may comprise a content of recycled material of at least 20 wt.% but can be used in the manufacture of caps or closures as it shows a desired balance of mechanical properties comprising stiffness and environmental stress crack resistance (ESCR), and good processing properties. Indeed, as it is shown by the examples, it shows a tensile modulus of at least 900 MPa as determined according to ISO 527-1 : 2012, preferably at least 1000 MPa, together with good ESCR properties such as environmental stress crack resistance (ESCR) of at least 360 h, preferably at least 500 h, as determined according to ISO16670, 4 MPa, Arkopal N100. In addition, the composition of polyethylene shows good processability performances as it can be injected at a pressure of less than 1450 bar, preferably of less than 1400 bar during the manufacture of caps or closures. The inventive polyolefin composition is remarkable as it provides a process and a composition comprising a high content of recycled material but can be used to produce caps or closures with a similar stiffness and processability but enhanced ESCR such as an ESCR that is twice the ESCR measured on caps or closures produced from prior art virgin compositions of polyethylene. This corresponds to the virgin ESCR super grade actually found on the market but with a better processability.

The polyolefin composition is obtained by different steps, providing the steps of blending, mixing and extruding using optionally a twin screw extruder for blending of component I and component II and optionally pelletizing the obtained polyolefin composition.

The step of blending of the components can be carried out according to any blending method known from the art and in any combinations thereof in different variations. This can be, for instance, dry blending, wet blending or melt blending. The blending conditions depend upon the blending technique and the kind and ratio of the recycled polyethylene involved.

Preferably, the polyolefin composition further comprises at least one ultraviolet absorber selected from the group of hydroxyphenyl benzotriazoles; with preference, in an amount of at least 500 ppm based on the total weight of the polyolefin composition of polyethylene and/or in an amount of at most 4000 ppm based on the total weight of the polyolefin composition, preferably in an amount of at most 2000 ppm based on the total weight of the polyolefin composition. Especially when post consumer polyethylene enriched recycled material is blended with polyethylene of virgin origin, the absorption of UV light accelerates degradation of polyethylene, therefore for protection ultraviolet absorber must be added.

The polyethylene component of virgin origin is obtainable by a polymerization process comprising the steps of
a) polymerizing the ethylene monomer and
b) optionally one or more alpha olefin co-monomers,
c) in the presence of a hybrid catalyst system, prepared comprising the following steps:
   i. provision of a mixture of at least two different organic transition metal compounds, at least one hydrolyzed organo- aluminum compound and a solvent and
   ii. impregnation of a dry porous support component with the mixture of a total volume of the mixture being from 0.6 to 1.5 times the total pore volume of the support component.

Use of polyolefin composition preferably for injection moulding and press moulding applications.

Use of polyolefin composition, for manufacturing of a cap or closure, having high environmental crack resistance and stiffness, which can be provided by the polyolefin composition.

An article comprising the polyolefin composition according to any on of the preceding claims, characterized in that the article is processed via injection moulding, preferably wherein the article is used for caps and closures.

ESCR of production of caps and closure is a key to demanding applications, apart from excellent processability. A narrow molar mass distribution is favorable for injection moulding processing but unfavorable for getting a higher ESCR performance. Polyethylene combines both properties in a unique combination and is therefore very suitable for blending with recycled HDPE. The used virgin resin for preparing the blends shows a higher melt rate, typical for injection moulding applications, in contrast to the blend composition as described in WO 2021/074171.

The strain hardening performance is also extraordinary, while maintaining other properties similar to the blend of virgin polyethylene marketed for the purpose of cable jacketing. The present disclosure is also concerned with maximizing the loading of recycled material (with loadings of up to 85 wt. % of recyclate) in the composition and with the use of a combination of specific blends of component II to improve the ESCR properties and or strain hardening properties of component I.

The underlying problem to be solved is the use of a "Hybrid" catalyst with two components in a single reactor. Hybrid Catalysts have been found to deliver an excellent combination of high Charpy and ESCR properties in combination with extraordinary high melt index enabling significant lowering of processing temperatures in RM, saving cost, time and energy when the polyethylene is processed via injection molding or compression molding which is unprecedented so far in known polyethylene world. Regarding the data, the contribution of polyethylene of virgin origin for the technical effect is clearly shown that the hybrid grades perform much better with respect to Charpy and FNCT at the same density and even significantly higher MFR (2.16 kg).

Furthermore, component I obtainable by using the inventive hybrid catalyst, is also a much desired blending component to improve recyclate processing and application properties. As the properties like the melt index of component II are so high, the loading of the inventive polyethylene with non-processable recyclate is much higher.

These hybrid catalysts introduce an "in-reactor" blend with excellent homogeneity, high ESCR and Charpy properties, as they move polyethylene processes to a new level in product properties. By modifying the catalyst composition it is possible to tune the polymer structure, the type and the reaction conditions, besides resulting in high processability, as the use of two active sites on the catalyst it combines e.g. good ESCR performance with high impact strength at low temperatures, while the obtained polyethylene gain excellent processability from the 1st active component of the hybrid catalyst and mechanical properties from the 2nd active component: Resulting in a completely new approach of designing and adjusting desired properties in polyethylene synthesis.

### CATALYST PREPARATION

The preparation of the catalyst system to obtain polyethylene (B) is described in the following in more detail, comprising the following steps:
A) provision of a mixture of at least two different organic transition metal compounds, at least one hydrolyzed organoaluminum compound and a solvent and
B) impregnation of a dry porous support component with the mixture from step A), with the total volume of the mixture being from 0.6 to 1.5 times the total pore volume of the support component.

Furthermore, we have found a catalyst system for the polymerization of olefins which has an angle of repose determined in accordance with ISO 4324 is not more than 48° and comprises at least two different organic transition metal compounds and at least one hydrolyzed organoaluminum compound.

In addition, we have found the use of the catalyst system for the polymerization or copolymerization of olefins and a process for preparing polyolefins by polymerization or copolymerization of olefins in the presence of the catalyst system.

Possible organic transition metal compounds are in principle all compounds of the transition metals of groups 3 to 12 of the Periodic Table or the lanthanides which contain organic groups and preferably form catalysts which are active in olefin polymerization after reaction with the hydrolyzed organo-aluminum compound. These are usually compounds in which at least one monodentate or polydentate ligand is bound via a sigma or pi bond to the central atom. Possible ligands include both ligands containing cyclopentadienyl radicals and ligands which are free of cyclopentadienyl radicals. A large number of such compounds which are suitable for olefin polymerization are described in Chem. Rev. 2000, Vol. 100, No. 4. Multinuclear cyclopentadienyl complexes are also suitable for olefin polymerization. Organic transition metal compounds containing only halogens and/or alkoxides are less well suited.

### Catalyst preparation is described in EP1740626

### Example 1

A mixture of 632 mg (1.042 mmol) of 2,6-diacetylpyridinebis(2,4-dichloro-6-methylphenylanil)iron dichloride, 4.38 g (8.903 mmol) of bis(n-butylcyclopentadienyl)hafnium dichloride and 188 ml, of MAO (4.75 M in toluene, 895 mmol) was stirred at room temperature for 30 minutes and subsequently added to 147.9 g of the pretreated support material while stirring and the mixture was stirred at room temperature for a further 2 hours ((Fe+Hf):Al=1 :90). The ratio of the total volume of the added solution to the pore volume of the support was 0.84. The solid was dried under reduced pressure until it was free flowing. This gave 310.4 g of catalyst which still contained 34% by weight of solvent (based on the total weight and calculated assuming complete application of all components to the support).

Comparative example C1 A mixture of 3.2 mg (56.44 µmol) of 2,6-diacetylpyridinebis(2,4-dichloro-6-methylphenylanil)iron dichloride and 1.07 ml of MAO (4.75 M in toluene, 5.07 mmol) in a further 10 ml of toluene was stirred at room temperature for 30 minutes and subsequently added to 8.6 g of the pretreated support material while stirring and the mixture was stirred at room temperature for a further 2 hours. The ratio of the total volume of the added solution to the pore volume of the support was 0.85. The solid was dried under reduced pressure until it was free-flowing and the calculated residual moisture content of solvent was less than 5%. A mixture of 241.6 mg (491.13 µmol) of bis(n-butylcyclopentadienyl)hafnium dichloride and 9.3 ml of MAO (4.75 M in toluene, 44.21 mmol) in a further 1.7 ml of toluene, which had been stirred at room temperature for 30 min beforehand, was added to the solid obtained in this way and the mixture was subsequently stirred at room temperature for a further two hours. The ratio of the total volume of the added solution to the pore volume of the support was 0.85. The solid was dried under reduced pressure until it was free-flowing and the calculated residual moisture content of solvent was less than 5%. ((Fe+Hf):AI=1 :90). This gave 12 g of catalyst which still contained 2.3% by weight of solvent (based on the total weight and calculated assuming complete application of all components to the support).

### Polymerisation:

Prod. Productivity of the catalyst in g of polymer obtained per g of catalyst used per hour total-CH3 is the amount of CH3-groups per 1000C including end groups.

Bis(n-butylcyclopentadienyl)hafnium dichloride is commercially available from Crompton Ltd. A. Preparation of the individual catalyst components.

2,6-Bis[1-(2-tert.butylphenylimino)ethyl]pyridine was prepared as in example 6 of WO 98/27124 and 2,6-Bis[1-(2-tert.butylphenylimino)ethyl]pyridine iron(II) dichloride was prepared as in example 15 of WO 98/27124.2,6-Bis[1-(2,4,6-trimethylphenylimino)ethyl]pyridine was prepared as in example 1 of WO 98/27124 and reacted in an analogous manner with iron(II) chloride to give 2,6-Bis[, 1-(2,4,6-trimethylphenylimino)ethyl]pyridine iron(II) dichloride, as likewise disclosed in WO 98/27124. 2,6-Bis[1-(2,4-dichloro-6-methylphenylimino)ethyl]pyridine iron(ll)dichloride was prepared according to the method of Qian et al., Organometallics 2003, 22, 4312-4321. Here, 65.6 g of 2,6-diacetylpyridine (0.4 mol), 170 g of 2,4-dichloro-6-methylaniline (0.483 mol), 32 g of silica gel type 135 and 160 g of molecular sieves (4A) were stirred in 1500 ml of toluene at 800 C for 5 hours and a further 32 g of silica gel type 135 and 160 g of molecular sieves (4A) were subsequently added. The mixture was stirred at 80 °C for a further 8 h, the insoluble solid was filtered off and washed twice with toluene. The solvent was distilled off from the filtrate obtained in this way, the residue was admixed with 200 ml of methanol and subsequently stirred at 55°C for 1 hour. The suspension formed in this way was filtered and the solid obtained was washed with methanol and freed of the solvent. This gave 95 g of 2,6-Bis[1-(2,4,6-trimethylphenylimino)ethyl]pyridine in 47% yield. The reaction with iron(ll) chloride was carried out as described by Qian et al., Organometallics 2003, 22, 4312-4321.

2,6-Bis[1-(4,6-Dimethyl-2-chloro-phenylimino) ethyl]pyridine iron(II) dichloride was prepared in analogy to 2,6-Bis[1-(2,4-dichloro-6-methylphenylimino)ethyl]pyridine iron(II) dichloride as described above.

### B) Preparation of the mixed catalyst systems employed for synthesis of the polyethylene a):

### Example 1

### a) Support pretreatment

XPO-2107, a spray-dried silica gel from Grace, was calcinated at 600 °C for 6 hours and subsequently 252.2 g of the dried silica gel admixed with 164.5 ml of MAO (4.75 M in Toluol, 0.78 mol). The mixture was stirred for one hour, filtered, the solid washed with toluene and then died under reduced pressure. b) Preparation of the mixed catalyst systems

A mixture of 1.48 g (2.45 mmol) of 2,6-Bis[1-(2,4-dichloro-6-methylphenylimino)ethyl]pyridine iron(ll) dichloride, 3.61 g (7.34 mmol) of bis(n-butylcyclopentadienyl)hafnium dichloride and 159.6 ml of MAO (4.75 M in toluene, 0.76 mol) was stirred at room temperature for 1 h and subsequently added while stirring to a suspension of 237.1 g of the pretreated support material a) in 800 ml of toluene. The mixture was stirred at room temperature for a further 3 hours, the resulting solid filtered off and washed with toluene. The solid was dried under reduced pressure until it was free-flowing. This gave 256.7 g of catalyst.

### Example 2a)

### Support pretreatment

XPO-2107, a spray-dried silica gel from Grace, was calcinated at 600 °C for 6 h.

### b) Preparation of the mixed catalyst systems

A mixture of 5.35 g (9.69 mmol) of 2,6-Bis[1-(2-tert.butylphenylimino)ethyl]pyridine iron(ll) dichloride, 7.49 g (15.22 mmol) of bis(n-butylcyclopentadienyl)hafnium dichloride and 472 ml of MAO (4.75 M in toluene, 2.24 mol) was stirred at room temperature for 30 minutes and subsequently added while stirring to a suspension of 276.8 g of the pretreated support material a) during the course of 45 min ((Fe+Hf):Al=1:90). The solid was dried under reduced pressure until it was free-flowing. This gave 609 g of catalyst which still contained 31.5 % by weight of solvent (based on the total weight and calculated on the basis of complete application of all components to the support).

### Example 3

Support pretreatment and preparation of the mixed catalyst systems were done essentially as described in example 1, except that 2,6-Bis[1-(4,6-Dimethyl-2-chloro-phenylimino) ethyljpyridine iron(II) dichloride was employed instead as the iron catalyst complex.

### C. Polymerization of the catalyst

The polymerization was always carried out in a fluidized-bed reactor having a diameter of 0.5 m. The reaction temperature was in the range of 94 to 1050 °C, the output in the range of 3.1 to 3.8 kg/h, ethylene was dosed at 3.0 to 5.0 kg/h and 1-hexene at 50 to 100 g/h, hydrogen gas was metered at 0.5 to 1.5 l/h. The pressure in the reactor was 20 bar.
0.1 g of tri-isobutylaluminium per hour were metered in in each case, except for comparative examples where hydrogen was metered at about 3 to 4 l/h. More detailed information on representative, individual synthetic polymerization protocols is published in WO 2005/103095. Catalysts were the catalysts from at least one of examples 1-3. Post-reactor granulation took place in a twin screw extruder, having a gear-pump operated discharger unit. The polyethylene product had specifications commensurate with the claims and description.

**Table 1: Components and compositions of invention**

| | Polyethylene | | PCR | |
|---|---|---|---|---|
| | a) Virgin PE | b) Virgin PE | PCR 1 | PCR 2 |
| Catalyst/Process | Ziegler/ multiple Reactor | Hybrid/ Single Reactor | - | - |
| | wt. % | wt. % | wt. % | wt. % |
| Inventive example 1 (PCR2/b) 30/70) | 0 | 70 | 0 | 30 |
| Inventive example 2 (PCR2/b) 40/60) | 0 | 60 | 0 | 40 |
| Inventive example 3 (PCR1/b) 40/60) | 0 | 60 | 40 | 0 |
| Inventive example 4 (PCR2/b) 30/70) | 70 | 0 | 0 | 30 |

**Table 2: Summary of physical and application properties of components and inventive polyolefin composition.**

| Examples | I.V. | Density | MI2 | Charpy (23 °C) | FNCT (50 °C, 6MPa) |
|---|---|---|---|---|---|
| | | | | | |

| | [dl/d] | [g/cm³] | [g/10 min] | [kJ/m²] | [kJ/m²] |
|---|---|---|---|---|---|
| Virgin PE a) | 1.85 | 0.954 | 1.6 | 4.3 | 12 |
| Virgin PE b) | 1.74 | 0.953 | 2 | 10.4 | 16 |
| | | | | | |
| PCR 1 | 1.79 | 0.955 | 1.8 | 4.1 | 8.4 |
| PCR 2 | 1.47 | 0.955 | 1.8 | 2.5 | 0.2 |
| | | | | | |
| Inventive example 1 (PCR2/b) 30/70) | 1.65 | 0.954 | 1.9 | 4.6 | 9.2 |
| Inventive example 2 (PCR2/b) 40/60) | 1.59 | 0.954 | 1.9 | 4.2 | 7.5 |
| Inventive example 3 (PCR1/b) 40/60) | 1.69 | 0.954 | 1.9 | 6.3 | 12 |
| Inventive example 4 (PCR2/a) 30/70) | 1.69 | 0.954 | 1.8 | 4.3 | 5 |

## Claims

1. A polyolefin composition comprising,
I. Component I in the range of 80 to 20 wt. % of a polyethylene enriched blend of a post consumer recyclate (PCR) (based on the total weight of the polyolefin composition), comprising 85 to 100 wt. % of polyethylene and 15 to 0 wt. % of polypropylene (based on the total weight of the polyolefin composition), having
a) a density in the range from 0.948 to 0.960 g/cm³ (ISO 1183, at 23 °C);
b) a MI2 in the range from 1.0 to 3.0 g/10 min (ISO 1133, 190 °C, 2.16 kg);
c) a MI5 in the range from 1.0 to 30.0 g/10 min, (ISO1133, 190 °C, 5 kg);
II. component II in the range of 20 to 80 wt. % (based on the total weight of the polyolefin composition) of at least one multimodal polyethylene, comprising
a) at least one polyethylene homopolymer,
b) at least one polyethylene copolymer formed from ethylene and at least one olefin with at least 4 and / or 6 carbons atoms used as comonomer, having
c) a density in the range of 0.948 to 0.960 g/cm³ (ISO 1183);
d) a melt flow rate MI2 in the range of 1.0 to 5.0 g/10 min (ISO 1133, 190 °C, 2.16 kg);
e) a melt flow rate MI5 in the range of 3.0 to 10.0 g/10 min (ISO 1133, 190 °C, 5 kg);
wherein the sum of all components always adds up to 100 wt. %.

2. The polyolefin composition, according to claim 1, wherein the polyethylene component II of virgin origin, is having
c) a FNCT in the range of 8.0 to 20.0 kJ/m²
d) a charpy in the range of 2.0 to 15.0 kJ/m².

3. The polyolefin composition, according to any of the preceding claims, wherein the polyethylene enriched post consumer recyclate (component II) is having
c) a Charpy in the range from 2.0 to 12.0 kJ/m² (ISO 179-21);
d) a FNCT in the range from 8 to 21 kJ/m² (ISO 16770, 50 °C, 6 MPa).

4. The polyolefin composition, according to claim 1, comprising
a) Component I in the range of 80 to 20 wt. % (component I) (based on the total weight of the polyolefin composition) of the polyethylene enriched blend of the post consumer recyclate component, wherein the post consumer recyclate material is comprising polypropylene and polyethylene, in a range from 85.0 to 100 wt. % of polyethylene and in a range 15.0 to 0 wt. % of polypropylene, and is preferably derived from caps and closures,
b) Component II in the range of 20 to 80 wt. % of the at least one bimodal polyethylene, wherein the polyethylene is obtained using a Hybrid- catalyst or Ziegler- Natta- catalyst;
c) wherein the sum of all components always adds up to 100 wt. %.

5. The polyolefin composition, according to any of the preceding claims, wherein component I is comprising an amount of polypropylene in the range of 15 to 0 wt. %.

6. The polyolefin composition, according to any one of the preceding claims, having an impact strength (according to ISO 179-1, at 23 °C) is in the range from 4.0 to 20.0 kJ/m², preferably in the range from 5.0 to 18.0 kJ/m², preferably in the range from 6.0 to 15.0 kJ/m², and an impact strength (ISO 179-1, at 0 °C) in the range from 1.0 to 20.0 kJ/m².

7. The polyolefin composition, according to any of the preceding claims, wherein component I is comprising a post consumer waste being preferably a regrind from post consumer waste, and/or a mixed plastic polyethylene recycling blend obtained from post consumer recyclate, obtainable by sorting, shredding etc. of post consumer waste, comprising polyethylene.

8. The polyolefin composition, according to any of the preceding claims, **characterized in that**, component I comprises a preferably PCR having food approval, more preferably comprising preferably a regrind from bottle's caps and closures, comprising polyethylene and polypropylene.

9. The polyolefin composition, according any of the preceding claims, **characterized in that**, component I comprises a polyethylene based recyclate plastic from post consumer waste shredded into pieces such that their final size, measured at the maximum length of the pieces, is 10 mm or greater.

10. The polyolefin composition, according to any of the preceding claims, **characterized in that** component II is a polyethylene of virgin origin, obtainable using a Ziegler Natta catalyst or a Hybrid catalyst, being a multimodal homopolymer and/ or copolymer or mixture thereof, the copolymer comprising ethylene and one or more alpha-olefin co-monomers selected from the group comprising C3 to C20 alpha-olefins; with preference, the co-monomer is 1-hexene, 1- buten or 1-octen.

11. Use of a polyolefin composition, according to any one of the preceding claims, for manufacturing of a cap or closure.

12. Process for producing the polyolefin composition according to any one of the preceding claims, wherein the process comprises the steps of providing a mixture of
a) Component I in the range of 80 to 20 wt. % of a polyethylene enriched blend of a post consumer recyclate (based on the total weight of the polyolefin composition) of the polyethylene enriched blend of recycled plastic material, comprising 85 to 100 wt. % of polyethylene and 15 to 0 wt. % of propylene (based on the total weight of the polyolefin composition),
b) Component II and in the range of 20 to 80 wt. % of at least one multimodal polyethylene, comprising
i. at least one polyethylene homopolymer, at least one polyethylene copolymer formed from ethylene and at least one olefin with at least 4 and / or 6 carbon atoms used as comonomer, (based on the total weight of the polyolefin composition)
ii. and optionally further additives
a. melting the mixture in an extruder, and
b. optionally pelletizing the obtained polyolefin composition.

13. The polyolefin composition according to any of the preceding claims, **characterized in that**, the polyolefin composition is obtained by providing the steps of blending, mixing and extruding using optionally a twin screw extruder, for the blending of component I and component II, and optionally pelletizing the obtained polyolefin composition.

14. An article comprising the polyolefin composition, according to any on of the preceding claims, in particular cap and closure.
